# EUROPEAN PATENT APPLICATION

(11) **EP 2 136 499 A1**
(43) Date of publication of application: **23.12.2009**
(21) Application number: 08739919.2
(22) Date of filing: 04.04.2008
(51) Int. Cl.: H04L 1/16, H04L 1/00

(54) **RETRANSMISSION REQUEST TRANSMITTING METHOD, TRANSMITTING SIDE APPARATUS AND RECEIVING SIDE APPARATUS**

(30) Priority: 06.04.2007 JP 2007101189
(71) Applicant: NTT DoCoMo, Inc., Chiyoda-ku Tokyo 100-6150 (JP)
(72) Inventor: UMESH, Anil, Tokyo 100-6150 (JP); MOTEGI, Masayuki, Tokyo 100-6150 (JP)
(74) Representative: HOFFMANN EITLE
(86) International application number: PCT/JP2008/056813
(87) International publication number: WO 2008/126808

(57) **Abstract**

In a retransmission request transmission method, a receiving-side apparatus notifies identification information of an RLC-data-PDU and a retransmission start position and a retransmission end position in the RLC-data-PDU, through a STATUS-PDU; and a transmitting-side apparatus retransmits a portion from the retransmission start position to the last portion in the RLC-data-PDU, when a predetermined value is notified as the retransmission end position by the STATUS-PDU (NACK).

## Description

### TECHNICAL FIELD

The present invention relates to a retransmission request transmission method in which a receiving-side apparatus transmits a retransmission request signal for a packet transmitted from a transmitting-side apparatus, and also to the transmitting-side apparatus and the receiving-side apparatus.

### BACKGROUND ART

In 3GPP, which is an organization that sets standards for third generation mobile communications systems, a study collectively termed as LTE (Long Term Evolution) has been conducted for achieving a drastic improvement of transmission speed and reduction of transmission delay in a radio access network (RAN); and formulation of standard specifications of the elemental technologies related to the study has been in progress.

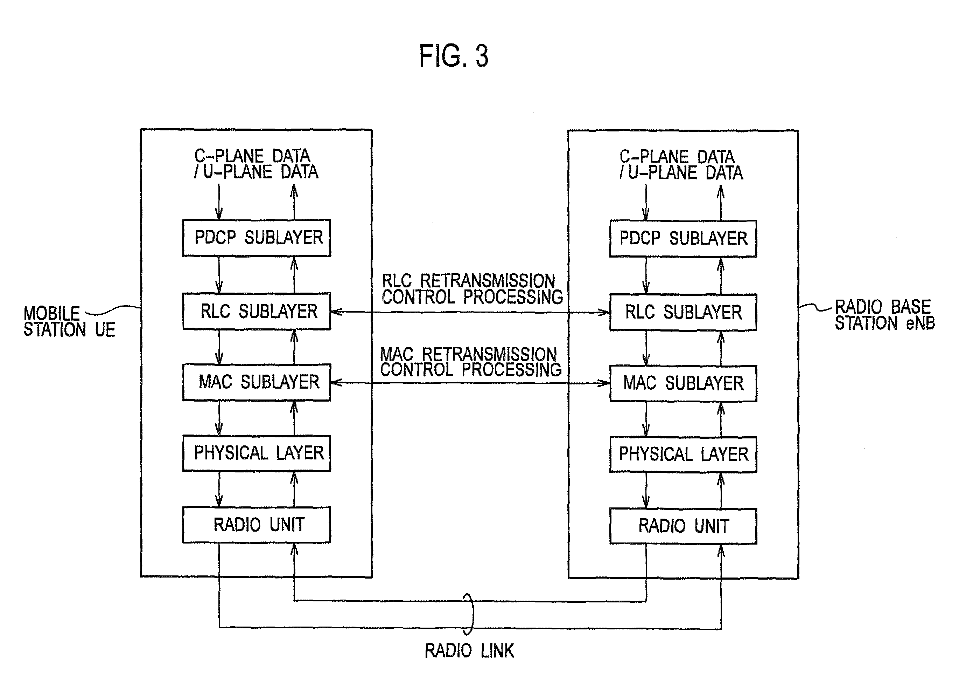

As shown in FIG. 3, the radio access network (E-UTRAN: Evolved Universal Terrestrial RAN) in an LTE mobile communication system is configured of a mobile station UE (User Equipment) and a radio base station eNB (E-UTRAN Node B). This system is configured in such a way that the mobile station UE and the radio base station eNB communicate with each other via a radio link (RL).

Moreover, each of the mobile station UE and the radio base station eNB is configured to terminate a PDCP (Packet Data Convergence Protocol) sublayer, an RLC (Radio Link Control) sublayer, a MAC (Medium Access Control) sublayer and a physical (PHY: Physical) layer.

In addition, a transmitting-side apparatus (mobile station UE or radio base station eNB) is configured to perform PDCP processing, RLC processing, MAC processing and PHY processing sequentially for data to be transmitted and then to transmit the data as radio signals from a radio unit.

Meanwhile, a receiving-side apparatus (mobile station UE or radio base station eNB) is configured to extract the transmitted data by performing PHY processing, MAC processing, RLC processing and PDCP processing sequentially for the radio signals received by a radio unit.

Here, the data to be transmitted includes user data (U-plane data) generated by an application or the like used by the user, and control data (C-plane data) used in controlling the mobile communication system, such as RRC (Radio Resource Control) signaling and NAS (Non Access Stratum) signaling.

Moreover, this system is configured in such a way that RLC retransmission control processing is performed between the RLC sublayer of the transmitting-side apparatus and the RLC sublayer of the receiving-side apparatus, and that HARQ (Hybrid Automatic Repeat Request) retransmission control processing (MAC retransmission control processing) is performed between the MAC sublayer of the transmitting-side apparatus and the MAC sublayer of the receiving-side apparatus.

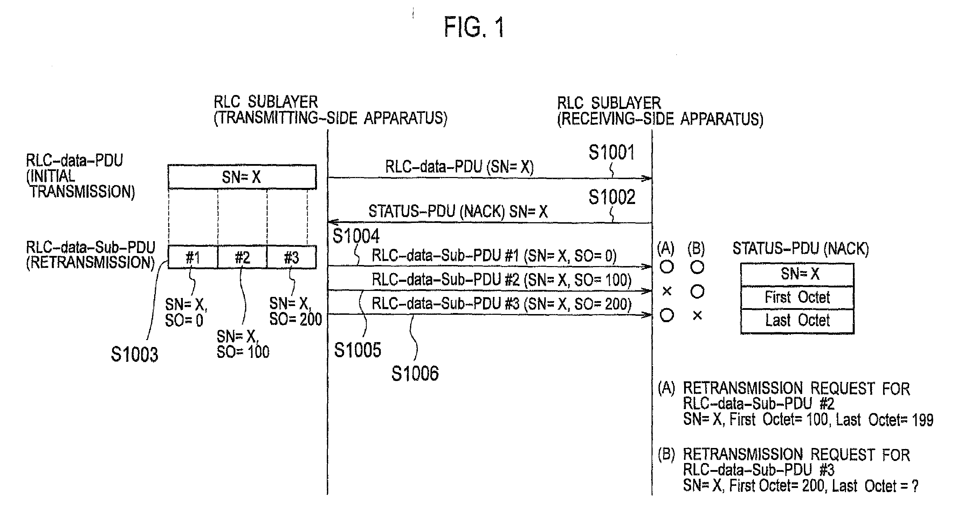

Hereinafter, RLC retransmission control processing that has been studied in terms of the aforementioned mobile communication system will be described with reference to FIG. 1.

As shown in FIG. 1, in step S1001, the RLC sublayer of the transmitting-side apparatus assigns SN=X to an RLC-data-PDU, and then transmits the RLC-data-PDU (initial transmission).

In step S1002, the RLC sublayer of the receiving-side apparatus transmits a STATUS-PDU (NACK), which is a retransmission request for the RLCdata-PDU with SN=X.

In step S1003, the RLC sublayer of the transmitting-side apparatus segments the RLC-data-PDU with SN=X (initial transmission) into three RLC-data-Sub-PDUs #1 to 3, by re-segmentation processing in accordance with a quality of the radio link between the transmitting-side apparatus and the receiving-side apparatus.

Here, "SN (sequence number of the RLC-data-PDU to which the RLC-data-Sub-PDUs belong)", and "SO (starting position of the RLC-data-Sub-PDU in the RLC-data-PDU)" are set in the RLC-data-Sub-PDUs.

In the example in FIG. 1, "SN=X, SO=0" are set in the RLC-data-Sub-PDU #1, "SN=X, SO=100" are set in the RLC-data-Sub-PDU #2, and "SN=X, SO=200" are set in the RLC-data-Sub-PDU #3.

The RLC sublayer of the transmitting-side apparatus transmits the RLC-data-Sub-PDU #1 in step S1004, then transmits the RLC-data-Sub-PDU #2 in step S1005, and transmits the RLC-data-Sub-PDU #3 in step S1006.

Here, in a case where the RLC sublayer of the receiving-side apparatus succeeds in receiving the RLC-data-Sub-PDU #1 and RLC-data-Sub-PDU #3, but fails to receive the RLC-data-Sub-PDU #2 (case (A)), the RLC sublayer of the receiving-side apparatus generates and sends back a STATUS-PDU in order to request retransmission of the RLC-data-Sub-PDU #2. In this case, the STATUS-PDU is set to have: "SN=X, First Octet (retransmission start position in the RLC-data-PDU) = 100 (one octet after the endmost position of the RLC-data-Sub-PDU #1 in the RLC-data-PDU, that is, the starting position of the RLC-data-Sub-PDU #2 in the RLC-data-PDU), and Last Octet (retransmission end position in the RLC-data-PDU) = 199 (one octet before the starting position of the RLC-data-Sub-PDU #3 in the RLC-data-PDU, that is, the endmost position of the RLC-data-Sub-PDU #2 in the RLC-data-PDU).

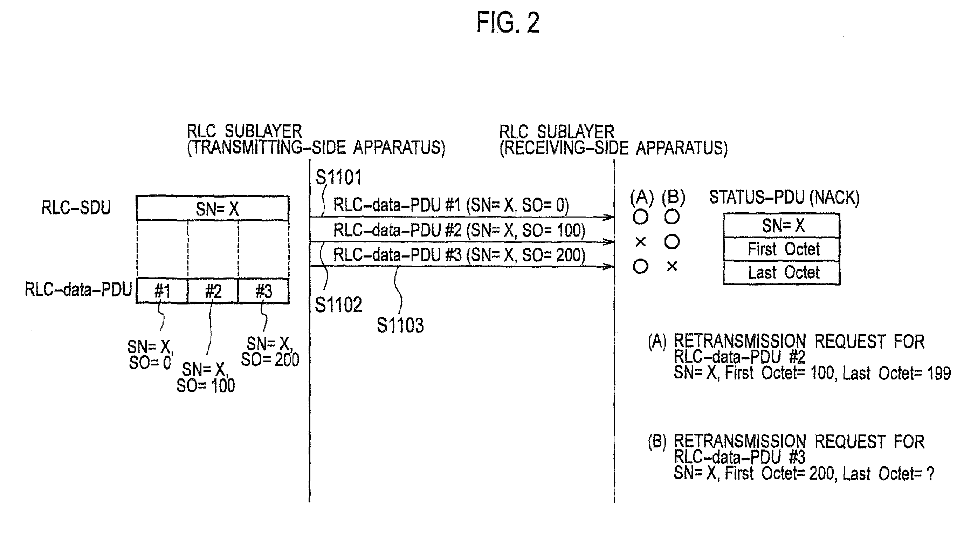

Hereinafter, the second RLC retransmission control processing that has been studied in the aforementioned mobile communication system will be described with reference to FIG. 2.

As shown in FIG. 2, in step S1101, the RLC sublayer of the transmitting-side apparatus segments an RLC-SDU (that is, a PDCP-PDU), to which SN=X is assigned, into three RLC-data-PDUs #1 to 3, by segmentation processing in accordance with a quality of the radio link between the transmitting-side apparatus and the receiving-side apparatus.

Note that, SN=X assigned to the RLC-SDU (that is, a PDCP-PDU) is one assigned by the PDCP sublayer of the transmitting-side apparatus.

Here, the RLC-data-PDUs is set to have "SN (sequence number of the RLC-SDU to which the RLC-data-PDUs belong)", and "SO (starting position of the RLC-data-PDU in the RLC-SDU)".

In the example in FIG. 2, "SN=X, SO=0" are set in the RLC-data-PDU #1, "SN=X, SO=100" are set in the RLC-data-PDU #2, and "SN=X, SO=200" are set in the RLC-data-PDU #3.

The RLC sublayer of the transmitting-side apparatus transmits the RLC-data-PDU #1 in step S1102, then transmits the RLC-data-PDU #2 in step S1103 and transmits the RLC-data-PDU #3 in step S1104.

Here, in a case where the RLC sublayer of the receiving-side apparatus succeeds in receiving the RLC-data-PDU #1 and RLCdata-PDU #3, but fails to receive the RLC-data-PDU #2 (case (A)), the RLC sublayer of the receiving-side apparatus generates a STATUS-PDU and replies with the STATUS-PDU in order to request retransmission of the RLC-data-PDU #2. In this case, the STATUS-PDU is set to have: "SN=X, First Octet (retransmission start position in the RLC-SDU) - 100 (one octet after the endmost position of the RLC-data-PDU #1 in the RLCSDU, that is, the starting position of the RLC-data-PDU #2 in the RLC-SDU), and Last Octet (retransmission end position in the RLC-SDU) = 199 (one octet before the starting position of the RLC-data-PDU #3 in the RLC-SDU, that is, the endmost position of the RLC-data-PDU #2 in the RLC-SDU).
Non-Patent Document 1: RLC Specification of IMT-2000: 3GPP TS 25.322 V6.9.0 (2006-09)
Non-Patent Document 2: LTE Stage 2 Specification: 3GPP TS 36.300 V8.0.0 (2007-03)

### DISCLOSURE OF THE INVENTION

However, in the RLC retransmission control processing in the aforementioned mobile communication system, as shown in FIG. 1 and FIG. 2, the RLC sublayer of the receiving-side apparatus is configured to specify the endmost position of the RLC-data-Sub-PDU (RLC-data-PDU in the case shown in FIG. 2) having failed to be received, from the starting position of the RLC-data-Sub-PDU (RLCdata-PDU forming the RLC-SDU in the case shown in FIG. 2) subsequent to this failed RLC-data-Sub-PDU (RLC-data-PDU in the case shown in FIG. 2).

For this reason, there is a problem that the RLC sublayer of the receiving-side apparatus cannot specify the endmost position of the RLC-data-Sub-PDU #3 (RLC-data-PDU #3 in the case shown in FIG. 2) in the RLC-data-PDU (RLC-SDU in the case shown in FIG. 2), and thus cannot set "Last Octet" in the STATUS-PDU (NACK), in a case where the RLC sublayer of the receiving-side apparatus succeeds in receiving the RLC-data-Sub-PDU #1 (RLC-data-PDU #1 in the case shown FIG. 2) and RLC-data-Sub-PDU #2 (RLC-data-PDU #2 in the case shown in FIG. 2), but fails to receive the RLC-data-Sub-PDU #3 (RLC-data-PDU #3 in the case shown in FIG. 2) (case (B)). This is because there is no RLC-data-Sub-PDU (RLC-data-PDU forming the RLC-SDU in the case shown in FIG. 2) subsequent to the RLC-data-Sub-PDU #3 (RLC-data-PDU #3 in the case shown in FIG. 2), which is the last RLC-data-Sub-PDU (RLC-data-PDU in the case shown in FIG. 2) forming the RLC-data-PDU (RLC-SDU in the case shown in FIG. 2).

In this respect, the present invention has been made in view of the aforementioned problem. An object of the present invention is to provide a retransmission request transmission method, a transmitting-side apparatus and a receiving-side apparatus for enabling the transmitting-side apparatus to perform processing of a retransmission request for the last RLC-data-Sub-PDU (RLC-data-PDU in the case shown in FIG. 2) forming an RLC-data-PDU (RLC-SDU in the case shown in FIG. 2).

A first aspect of the present invention is summarized as a retransmission request transmission method in which a receiving-side apparatus transmits a retransmission request signal for a packet transmitted from a transmitting-side apparatus in a mobile communication system where the transmitting-side apparatus is capable of generating a plurality of second packets by segmenting a first packet in accordance with a quality of a radio link with the receiving-side apparatus, the first packet being a data unit to which packet identification information is to be assigned, and then of transmitting the plurality of second packets, the method including the steps of: determining, at the receiving-side apparatus, a retransmission start position and a retransmission end position of each of the second packets in the first packet, on the basis of the packet identification information of the first packet and a starting position of the second packet in the first packet, which are included in the second packet; notifying, at the receiving-side apparatus, the packet identification information of the first packet for which retransmission is requested to the transmitting-side apparatus, and a retransmission start position and a retransmission end position in the first packet for which retransmission is requested to the transmitting-side apparatus, through the retransmission request signal; and retransmitting, at the transmitting-side apparatus, a portion from the retransmission start position to the retransmission end position in the first packet, on the basis of the packet identification information of the first packet and the retransmission start position and the retransmission end position in the first packet, which are included in the retransmission request signal received from the receiving-side apparatus; wherein the transmitting-side apparatus retransmits a portion from the retransmission start position to the last portion in the first packet, when a predetermined value is notified as the retransmission end position by the retransmission request signal.

A second aspect of the present invention is summarized as a transmitting-side apparatus configured to retransmit a particular packet in accordance with a retransmission request signal for the particular packet from a receiving-side apparatus in a mobile communication system capable of generating a plurality of second packets by segmenting a first packet in accordance with a quality of a radio link with the receiving-side apparatus, the first packet being a data unit to which packet identification information is to be assigned and then of transmitting the second packets, wherein the transmitting-side apparatus is configured to retransmit a portion from a retransmission start position to a retransmission end position in the first packet, on the basis of the packet identification information of the first packet and a retransmission start position and a retransmission end position in the first packet, which are included in the retransmission request signal received from the receiving-side apparatus, and the transmitting-side apparatus is configured to retransmit a portion from the retransmission start position to the last portion in the first packet, when a predetermined value is notified as the retransmission end position by the retransmission request signal.

A third aspect of the present invention is summarized as a receiving-side apparatus configured to transmit a retransmission request signal for a packet transmitted from a transmitting-side apparatus, wherein when the transmitting-side apparatus generates a plurality of second packets by segmenting a first packet in accordance with a quality of a radio link with the receiving-side apparatus, the first packet being a data unit to which the packet identification information is to be assigned, and transmits the plurality of second packets, the receiving-side apparatus is configured to determine a retransmission start position and a retransmission end position of each of the second packets in the first packet, on the basis of the packet identification information of the first packet and a starting position of the second packet in the first packet, which are included in the second packet; the receiving-side apparatus is configured to notify, through the retransmission request signal, the packet identification information of the first packet for which retransmission is requested to the transmitting-side apparatus, and the retransmission start position and the retransmission end position in the first packet for which retransmission is requested to the transmitting-side apparatus; and the receiving-side apparatus is configured to notify a predetermined value as the retransmission end position by the retransmission request signal, when retransmission of a portion from the retransmission start position to the last in the first packet is determined to be requested.

As described above, according to the present invention, it is possible to provide a retransmission request transmission method, a transmitting-side apparatus and a receiving-side apparatus that enable, in the transmitting-side apparatus, processing of a retransmission request for the last RLC-data-Sub-PDU (RLC-data-PDU in the case shown in FIG. 2) forming an RLC-data-PDU (RLC-SDU in the case shown in FIG. 2).

### BRIEF DESCRIPTION OF THE DRAWINGS

[FIG. 1] FIG. 1 is a sequence diagram showing operations of the LTE mobile communication system.
[FIG. 2] FIG. 2 is a sequence diagram showing operations of the LTE mobile communication system.
[FIG. 3] FIG. 3 is a diagram showing a protocol layer configuration in a radio access network of a mobile communication system according to a first embodiment of the present invention.
[FIG. 4] FIG. 4 is a functional block diagram of an RLC sublayer in a mobile station and a radio base station according to the first embodiment of the present invention.
[FIG. 5] FIG. 5 is a diagram for describing re-segmentation processing to be performed in the RLC sublayer in the mobile station and the radio base station according to the first embodiment of the present invention.
[FIG. 6] FIG. 6 is a diagram showing an example of the format of an RLC-data-PDU to be generated by the RLC sublayer in the mobile station and the radio base station according to the first embodiment of the present invention.
[FIG. 7] FIG. 7 is a diagram showing an example of the format of an RLC-data-Sub-PDU to be generated by the RLC sublayer in the mobile station and the radio base station according to the first embodiment of the present invention.
[FIG. 8] FIG. 8 is a diagram showing an example of the format of a STATUS-PDU to be generated by the RLC sublayer in the mobile station and the radio base station according to the first embodiment of the present invention.
[FIG. 9] FIG. 9 is a sequence diagram showing operations of the mobile communication system according to the first embodiment of the present invention.
[FIG. 10] FIG. 10 is a sequence diagram showing operations of a mobile communication system according to a modification 1 of the present invention.

### BEST MODE FOR CARRYING OUT THE INVENTION

### (Configuration of Mobile Communication System According to First Embodiment of the Present Invention)

A description will be given of a configuration of a mobile communication system according to a first embodiment of the present invention with reference to FIGS. 3 to 8.

Note that, in this embodiment, the description will be given of a mobile communication system including an LTE/SAE (System Architecture Evolution) architecture for which standardization by 3GPP has been in progress, as an example, as shown in FIG. 3, but the present invention is not limited to the mobile communication system, and is applicable to a mobile communication system including another architecture.

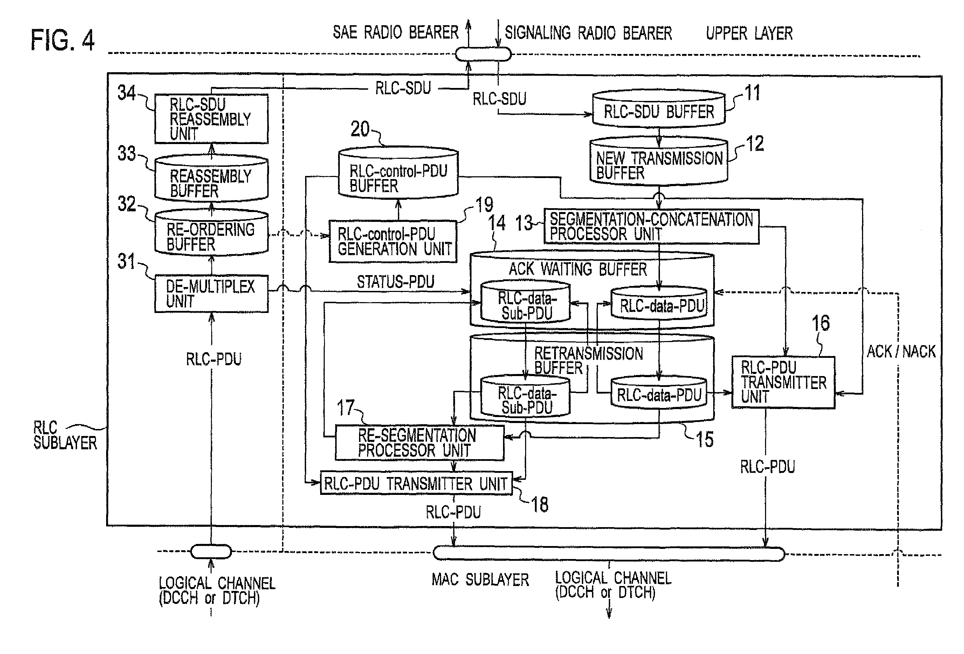

A description will be given of a functional configuration of an RLC sublayer of Acknowledge mode (AM) (hereinafter, referred to as RLC sublayer) with reference to FIG. 4.

Note that, a part of or all of the functions (modules) constituting the RLC sublayer shown in FIG. 4 may be implemented by hardware or software on an IC chip.

For example, on an IC chip, functions (modules) constituting a MAC sublayer and a physical layer for which simple and high speed processing is generally required may be configured to be implemented by hardware, and functions (modules) constituting the RLC sublayer for which complex processing is generally required may be configured to be implemented by software.

In addition, a function (module) constituting the physical layer, a function (module) constituting the MAC sublayer and a function (module) constituting the RLC sublayer may be implemented on the same IC chip, or may be implemented on different IC chips, respectively.

Hereinafter, an example of a configuration of the RLC sublayer in the mobile communication system according to this embodiment will be shown with reference to FIG. 4.

As shown in FIG. 4, the RLC sublayer includes an RLC-SDU buffer 11, a new transmission buffer 12, a segmentation-concatenation processor unit 13, an ACK waiting buffer 14, a retransmission buffer 15, an RLC-PDU transmitter unit 16, a re-segmentation processor unit 17, an RLC-PDU transmitter unit 18, an RLC-control-PDU generation unit 19, an RLC-control-PDU buffer 20, a de-multiplex unit 31, a reordering buffer 32, a reassembly buffer 33 and an RLC-SDU reassembly unit 34.

The RLC-SDU buffer 11 is configured to store an RLC-SDU received from an upper layer therein.

The new transmission buffer 12 is configured to copy the RLC-SDU stored in the RLC-SDU buffer 11 and then to store the RLC-SDU therein.

The segmentation-concatenation processor unit 13 is configured to perform segmentation processing or concatenation processing for the RLC-SDU (or a part thereof) stored in the new transmission buffer 12, and thereby to generate an RLC-PDU whose size becomes the largest within a range of an allowable amount of transmission data notified from a MAC sublayer along with a notification, in a case where a data transmission event is notified by the MAC sublayer. At this time, the segmentation-concatenation processor unit 13 assigns a sequence number (packet identification information) to each RLC-data-PDU to be generated.

In addition, the segmentation-concatenation processor unit 13 is configured to transmit the generated RLC-data-PDU to the RLC-PDU transmitter unit 16, and also to cause the generated RLC-data-PDU to be stored in the ACK waiting buffer 14.

The ACK waiting buffer 14 is configured to store, therein, the RLC-data-PDU from the segmentation-concatenation processor unit 13, an RLC-data-PDU or an RLC-data-Sub-PDU from the retransmission waiting buffer 15, and an RLC-data-Sub-PDU from the re-segmentation processor unit 17.

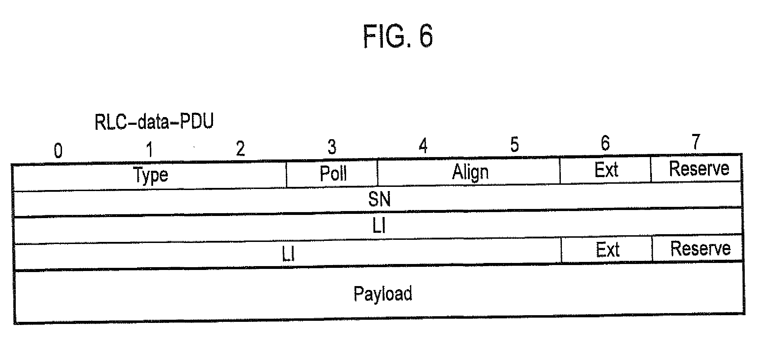

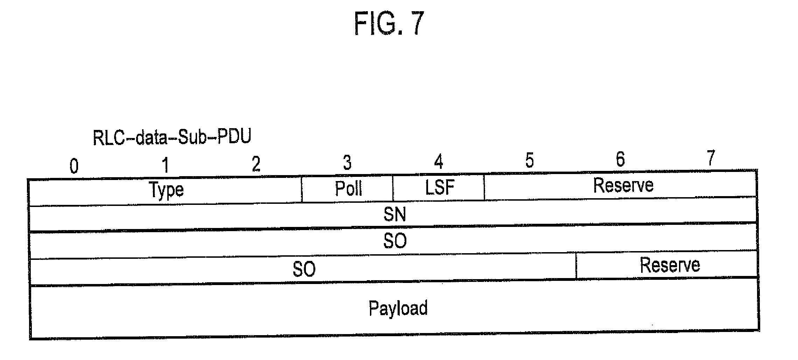

FIG. 6 shows a format example of the RLC-data-PDU used in the mobile communication system according to this embodiment. FIG. 7 shows a format example of the RLCdata-Sub-PDU used in the mobile communication system according to this embodiment.

As shown in FIG. 6, the header portion of the RLC-data-PDU has a "Type" field, a "Poll" field, an "Align" field, an "Ext" field, an "SN" field and an "LI" field.

In addition, as shown in FIG. 7, the header portion of the RLC-data-Sub-PDU includes a "Type" field, a "Poll" field, an "LSF (Last Segment Flag)" field, an "SN" field and an "SO (Segment Offset)" field.

The "Type" field is a field showing a type of the RLC-PDU. For example, RLC-data-PDU, RLC-data-Sub-PDU, RLC-control-PDU or the like may be set in the "Type" field as the type of the RLC-PDU.

The "Poll" field is a field indicating whether or not transmission of a STATUSPDU is requested to the RLC sublayer of the receiving-side apparatus.

The "Align" field is a field indicating whether or not the first byte of the RLC-data-PDU is the first byte of the RLC-SDU, and also whether or not the last byte of the RLC-data-PDU is the last byte of the RLC-SDU.

The "Ext" field is a field indicating whether or not an extension header is subsequent to the header portion of this RLC-data-PDU.

The "SN" field is a field showing the sequence number of the RLC-data-PDU, when included in an RLC-data-PDU, and is a field showing the sequence number of the RLC-data-PDU to which the RLC-data-Sub-PDU is related, when included in an RLC-data-Sub-PDU.

The "LI" field is a field showing the position of the last byte of the RLC-SDU in a "Payload" portion in the RLC-data-PDU.

The "LSF" field is a field indicating whether or not the RLC-data-Sub-PDU is the last RLC-data-Sub-PDU in the RLC-data-PDU to which the RLC-data-Sub-PDU is related.

The "SO" field is a field showing which byte in the RLC-data-PDU to which the RLC-data-Sub-PDU is related to, the first byte of the "Payload" portion of the RLC-data-Sub-PDU is.

The ACK waiting buffer 14 is configured to determine whether or not retransmission for the stored RLC-data-PDU or RLC-data-Sub-PDU is necessary, and to transmit, to the retransmission buffer 15, the RLC-data-PDU or RLC-data-Sub-PDU for which a determination is made that retransmission thereof is necessary.

Here, for example, the ACK waiting buffer 14 determines whether or not it is necessary for the stored RLC-data-PDU or RLC-data-Sub-PDU to be retransmitted, in a case where a STATUS-PDU (NACK) from the RLC sublayer and in a case where a NACK from the MAC sublayer of the receiving-side apparatus are received.

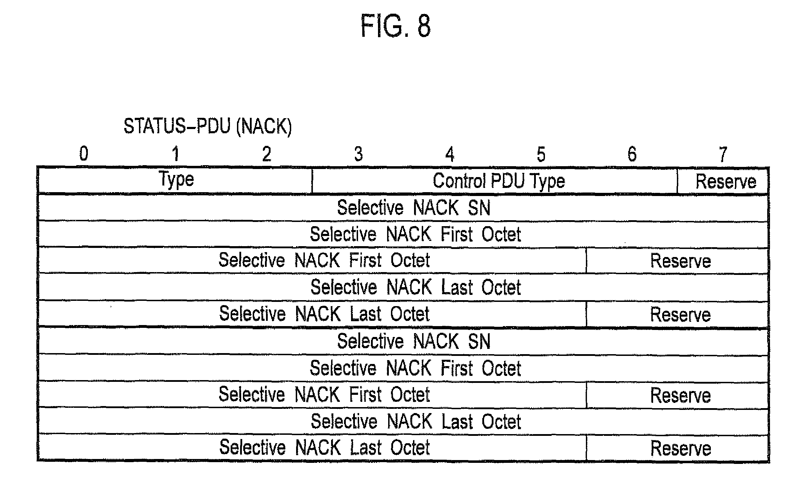

In FIG. 8, a format example of a STATUS-PDU (NACK) used in the mobile communication system according to the present embodiment is shown.

As shown in FIG. 8, the STATUS-PDU (NACK) includes a "Type" field, a "Control PDU Type" field, a "Selective NACK SN" field, a "Selective NACK First Octet" field and a "Selective NACK Last Octet" field.

Here, the STATUS-PDU (NACK) may include multiple sets of "Selective NACK SN" fields, "Selective NACK First Octet" fields and "Selective NACK Last Octet" fields.

The "Control PDU Type" field is a field showing a type (STATUS-PDU (ACK), STATUS-PDU (NACK) or the like) of the RLC-control-PDU.

The "Selective NACK SN" field is a field showing a sequence number of the RLC-data-PDU for which RLC retransmission has been determined to be necessary in a receive window of the RLC sublayer of the receiving-side apparatus.

The "Selective NACK First Octet" field is a field showing that from which byte (octet), in the RLC-data-PDU specified by the "Selective NACK SN" field, needs to be retransmitted.

The "Selective NACK Last Octet" field is a field showing that up to which byte (octet), in the RLC-data-PDU specified by the "Selective NACK SN" field, needs to be retransmitted.

Here, in a case where a particular value (predetermined value) is set in the "Selective NACK Last Octet" field, the field shows that bytes up to the last octet in the RLC-data-PDU are to be retransmitted.

Here, the ACK waiting buffer 14 is configured to determine that a portion from the retransmission start position to the retransmission end position in the first packet needs to be retransmitted, on the basis of the value (identification information of the first packet) of the "Selective NACK SN" field, the value (retransmission start position in the first packet) of the "Selective NACK First Octet" field and the value (the retransmission end position in the first packet) of the "Selective NACK Last Octet" field, which are included in the STATUS-PDU (NACK) (retransmission request signal) received from the receiving-side apparatus.

Note that, the ACK waiting buffer 14 determines that a portion from the retransmission start position to the last portion in the RLC-data-PDU needs to be retransmitted, in a case where the particular value (predetermined value) is set as the value of the "Selective NACK Last Octet" field (that is, in a case where the predetermined value is notified as the retransmission end position by the retransmission request signal) in the STATUS-PDU (NACK) (retransmission request signal) received from the receiving-side apparatus.

The retransmission buffer 15 is configured to store an RLC-data-PDU or an RLC-data-Sub-PDU from the ACK waiting buffer 14 therein.

The RLC-PDU transmitter unit 16 is configured to transmit, to the MAC sublayer, the RLC-data-PDU transmitted from the segmentation-concatenation processor unit 13 and the RLC-data-PDU stored in the retransmission buffer 15, in a case where a data transmission event is notified from the MAC sublayer.

Here, the RLC-PDU transmitter unit 16 may be configured to generate an RLC-data-PDU-piggybacked-control-PDU, by adding the RLC-control-PDU (STATUS-PDU or the like) stored in the RLC-control-PDU buffer 20 to the RLC-data-PDU to be transmitted, and then to transmit the RLC-data-PDU-piggybacked-control-PDU.

The re-segmentation processor unit 17 is configured to generate multiple RLC-data-Sub-PDUs (second packets) by segmenting, in accordance with a quality of the radio link, that is, in accordance with the allowable amount of transmission data notified by the MAC sublayer along with the notification, one RLC-data-PDU (first packet that is a data unit to which packet identification information (sequence number) is assigned) or RLC-data-Sub-PDU stored in the retransmission buffer 15. In other words, the re-segmentation processor unit 17 is configured to perform re-segmentation processing for the RLC-data-PDU or RLC-data-Sub-PDU stored in the retransmission buffer 15.

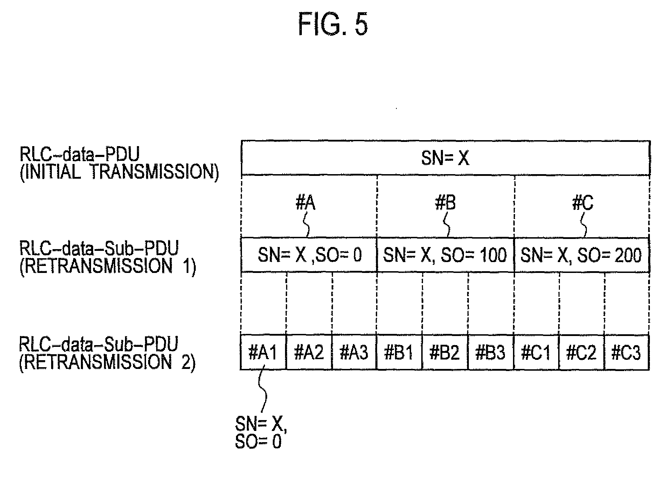

In an example in FIG. 5, the re-segmentation processor unit 17 segments an RLC-data-PDU (SN=x) into three RLC-data-Sub-PDUs #A to #C at the first retransmission, and segments the three RLC-data-Sub-PDUs #A to #C into three RLC-data-Sub-PDUs #A1 to #A3, #B1 to #B3 and #C1 to #C3, respectively.

Here, since the RLC-data-Sub-PDUs #A1, #A2, #B1, #B2, #C1 and #C2 are not the last RLCdata-Sub-PDUs forming the RLC-data-PDUs #A, #B and #C, respectively, "0" is set in the "LSF" fields. Since the RLC-data-Sub-PDUs #A3, #B3 and #C3 are the last RLC data-Sub-PDUs forming the RLC-data-PDUs #A, #B and #C, respectively, "1" is set in the "LSF" fields.

The RLC-PDU transmitter unit 18 is configured to transmit, to the MAC sublayer, the RLC-data-Sub-PDU that has been subjected to the re-segmentation processing by the re-segmentation processor unit 17, in a case where a data transmission event is notified from the MAC sublayer.

Here, the RLC-PDU transmitter unit 18 may be configured to generate an RLC-data-Sub-PDU-piggybacked-control-PDU, by adding the RLC-control-PDU (STATUS-PDU or the like) stored in the RLC-control-PDU buffer 20 to the RLC-data-Sub-PDU to be transmitted, and to transmit the RLC-data-Sub-PDU-piggybacked-control-PDU.

The RLC-control-PDU generation unit 19 is configured to generate a STATUS-PDU (ACK/NACK) in accordance with a notification from the reordering buffer 32.

Specifically, the RLC-control-PDU generation unit 19 is configured to set, in order to request retransmission of the RLC-data-Sub-PDU, the receiving of which has been failed, the value (identification information of the first packet) of the "Selective NACK SN" field, the value (retransmission start position in the first packet) of the "Selective NACK First Octet" and the value (retransmission end position in the first packet) of the "Selective NACK Last Octet" field in the STATUS-PDU (NACK), in accordance with the starting position of the RLC-data-Sub-PDU subsequent to the RLC-data-Sub-PDU, the receiving of which has been successful.

Note that, the RLC-control-PDU generation unit 19 is configured to determine that a portion from the next byte of the endmost position of the successfully received RLC-data-Sub-PDU to the last portion in the RLC-data-PDU to which the RLC-data-Sub-PDU is related is to be retransmitted, in a case where the RLC-data-Sub-PDU including "1" being set in the "LSF" field is not received even after a predetermined period passes. In addition, the RLC-control-PDU generation unit 19 is configured to set a particular value (predetermined value) in the "Selective NACK Last Octet" field of the STATUS-PDU (NACK) in this case.

The RLC-control-PDU buffer 20 is configured to store the RLC-control-PDU generated by the RLC-control-PDU generation unit 19.

The de-multiplex unit 31 is configured to extract a STATUS-PDU from the RLC-PDU received from the MAC sublayer, and then to forward the STATUS-PDU to the ACK waiting buffer 14, and also to extract and then to forward an RLC-data-PDU and an RLC-data-Sub-PDU to the reordering buffer 32.

The reordering buffer 32 is configured to perform the reordering processing for the stored RLC-data-PDU.

Specifically, the reordering buffer 32 is configured to cause RLC-data-PDUs (in-sequence) stored in the order of the sequence numbers to be stored in the reassembly buffer 33.

Meanwhile, the reordering buffer 32 is configured to perform RLC-data-PDU loss detection processing using a reordering timer for an RLC-data-PDU (out-of-sequence) not stored in the order of the sequence numbers. The reordering buffer 32 is configured to notify the RLC-control-PDU generation unit 19 that a loss is detected for an unreceived RLC-data-PDU, in a case where such a loss is detected.

The reordering buffer 32 is configured to assemble an RLC-data-PDU, in a case where the RLC-data-PDU can be assembled from stored RLC-data-Sub-PDUs.

The RLC-SDU reassembly unit 34 is configured to assemble and then to transmit RLC-SDUs to an upper layer in the order of the sequence numbers, in a case where the RLC-SDUs can be assembled from the RLC-data-PDUs stored in the reassembly buffer 33.

### (Operations of Mobile Communication System According to the First Embodiment of the Present Invention)

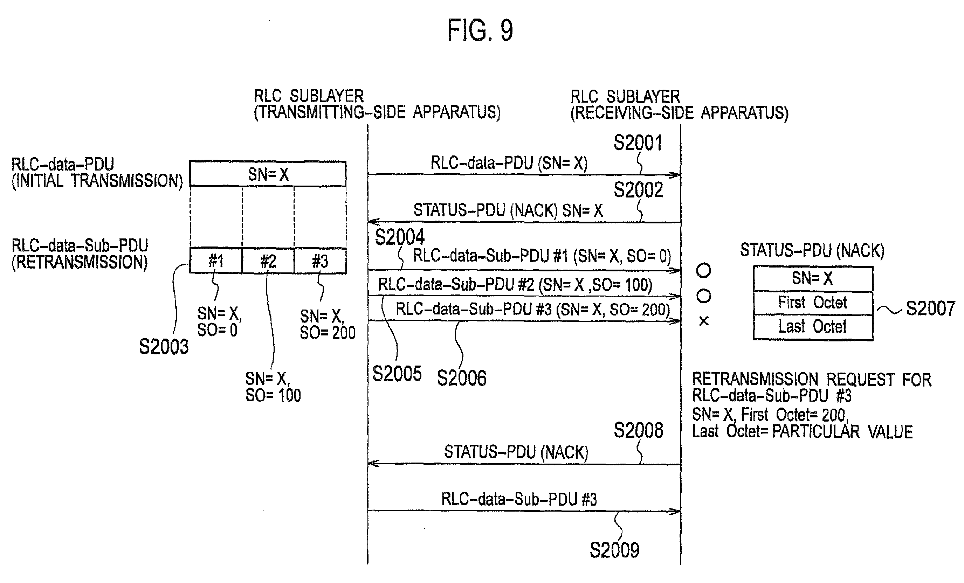

A description will be given of operations of the mobile communication system according to the first embodiment of the present invention with reference to FIG. 9.

As shown in FIG. 9, in step S2001, the RLC sublayer of the transmitting-side apparatus assigns SN=X to an RLC-data-PDU, and transmits the RLC-data-PDU (initial transmission) (first packet). Here, the format shown in FIG. 6 is applied as the format of the RLC-data-PDU (initial transmission).

In step S2002, the RLC sublayer of the receiving-side apparatus transmits a STATUS-PDU (NACK) that is the retransmission request for the RLCdata-PDU of SN=X.

In step S2003, the RLC sublayer of the transmitting-side apparatus segments the RLC-data-PDU with SN=X (initial transmission) into three RLC-data-Sub-PDUs #1 to 3, by re-segmentation processing in accordance with a quality of the radio link between the transmitting-side apparatus and the receiving-side apparatus. Here, the format shown in FIG. 7 is applied as the format of the RLC-data-Sub-PDUs #1 to 3 (retransmission) (second packets).

Here, "SN (sequence number of the RLC-data-PDU to which the RLC-data-Sub-PDUs belong)" and "SO (the starting position of the RLC-data-Sub-PDU in the RLC-data-PDU)" are set in the RLC-data-Sub-PDUs.

In the example in FIG. 9, "SN=X, SO=0" are set in the RLC-data-Sub-PDU #1, "SN-X, SO=100" are set in the RLC-data-Sub-PDU #2, and "SN=X, SO=200" are set in the RLC-data-Sub-PDU #3.

The RLC sublayer of the transmitting-side apparatus transmits the RLC-data-Sub-PDU #1 in step S2004, then transmits the RLC-data-Sub-PDU #2 in step S2003 and transmits the RLC-data-Sub-PDU #3 in step S2006.

Here, suppose that the RLC sublayer of the receiving-side apparatus succeeds in receiving the RLC-data-Sub-PDU #1 and the RLC-data-Sub-PDU #2, and fails to receive the RLC-data-Sub-PDU #3.

Then, in step S2007, the RLC sublayer of the receiving-side apparatus does not receive the RLC-data-Sub-PDU in which "1" is set in the "LSF" field (the RLC-data-Sub-PDU #3 in the example in FIG. 9) after a predetermined period passes. Thus, the RLC sublayer of the receiving-side apparatus determines that a portion from the next byte of the endmost position of the successfully received RLC-data-Sub-PDU (RLC-data-Sub-PDU #2 in the example in FIG. 9) to the last portion in the RLC-data-PDU to which the RLC-data-Sub-PDU is related is to be retransmitted, and sets a particular value (predetermined value) in the "Selective NACK Last Octet" field of the STATUS-PDU (NACK).

In step S2008, the RLC sublayer of the receiving-side apparatus transmits the STATUS-PDU (NACK) in which the particular value (predetermined value) is set in the "Selective NACK Last Octet" field.

In step S2009, the RLC sublayer of the transmitting-side apparatus determines that a portion (the RLC-data-Sub-PDU #3 in the example in FIG. 9) from the retransmission start position (position set in the "Selective NACK Fast Octet") to the last portion in the RLC-data-PDU with SN=X needs to be retransmitted and retransmits the portion. This is because the particular value (predetermined value) is set as the value of the "Selective NACK Last Octet" field in the STATUS-PDU (NACK) (retransmission request signal) received from the receiving-side apparatus (in other words, the predetermined value is notified as the retransmission end position by the retransmission request signal).

### (Effects and Advantages of the Mobile Communication System According to the First Embodiment of the Present Invention)

In the case of the mobile communication system according to the first embodiment of the present invention, as shown in FIG. 9, even in a case where the RLC sublayer of the receiving-side apparatus succeeds in receiving the RLC-data-Sub-PDU #1 and the RLC-data-Sub-PDU #2, but fails to receive the RLC-data-Sub-PDU #3, which is the last RLC-data-Sub-PDU forming the RLC-data-PDU (case (B)), the RLC sublayer of the receiving-side apparatus can specify the endmost position of the RLC-data-Sub-PDU #3 in the RLC-data-PDU by setting a particular value in the "Selective NACK Last Octet" field of the STATUS-PDU (NACK).

### (Modification 1)

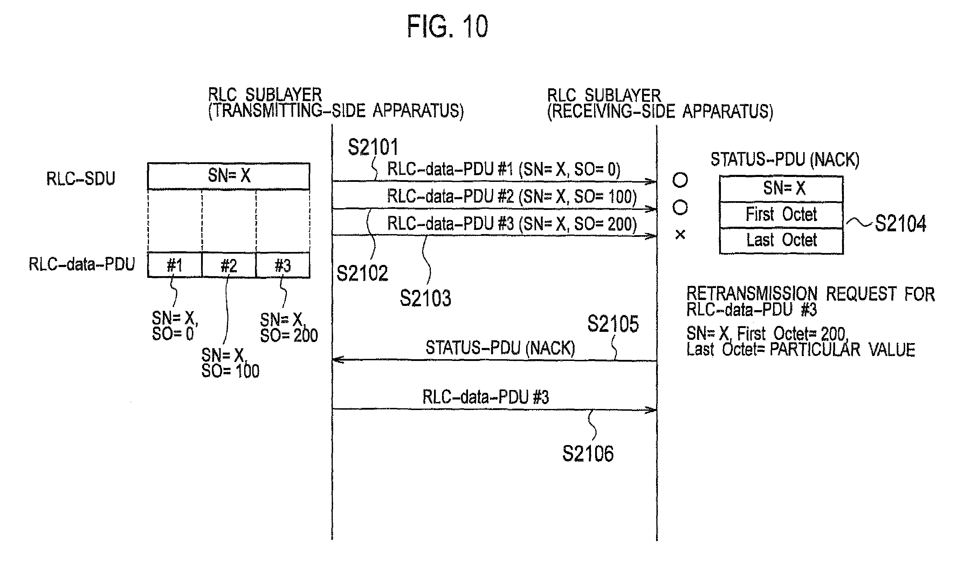

Next, a description will be given of a mobile communication system according to a modification 1 with reference to FIG. 10. Hereinafter, as to the modification 1 of the present invention, the description will be given with a focus on differences from the mobile communication system according to the aforementioned first embodiment.

As shown in FIG. 10, in step S2101, the RLC sublayer of the transmitting-side apparatus segments an RLC-SDU assigned SN=X (that is, PDCP-PDU) (first packet) into three RLC-data-PDUs #1 to 3 (second packets) by re-segmentation processing in accordance with a quality of the radio link between the transmitting-side apparatus and the receiving-side apparatus. Here, the format shown in FIG. 7 is applied as the format of the RLC-data-PDUs #1 to 3.

Note that, SN=X assigned to the RLC-SDU (that is, PDCP-PDU) is one assigned by the PDCP sublayer of the transmitting-side apparatus.

In addition, "SN (sequence number of the RLC-SDU to which the RLC-data-PDUs belong)" and "SO (the starting position of the RLC-data-PDU in the RLC-SDU)" are set in the RLC-data-PDUs.

In the example in FIG. 10, "SN=X, SO=0" are set in the RLC-data-PDU #1, "SN=X, SO=100" are set in the RLC-data-PDU #2, and "SN=X, SO=200" are set in the RLCdata-PDU #3.

The RLC sublayer of the transmitting-side apparatus transmits the RLC-data-PDU #1 in step S2102, then transmits the RLC-data-PDU #2 in step S2103 and transmits the RLC-data-PDU #3 in step S2104.

Here, suppose that the RLC sublayer of the receiving-side apparatus succeeds in receiving the RLC-data-PDU #1 and the RLCdata-PDU #2, and fails to receive the RLC-data-PDU #3.

Then, in step S2104, the RLC sublayer of the receiving-side apparatus does not receive the RLC-data-PDU in which "1" is set in the "LSF" field (the RLC-data-PDU #3 in the example in FIG. 10) after a predetermined period passes. Thus, the RLC sublayer of the receiving-side apparatus determines that a portion from the next byte of the endmost position of the successfully received RLC-data-PDU (RLC-data-PDU #2 in the example in FIG. 10) to the last portion in the RLC-SDU to which the RLC-data-PDU is related is to be retransmitted, and sets a particular value (predetermined value) in the "Selective NACK Last Octet" field of the STATUS-PDU (NACK).

In step S2105, the RLC sublayer of the receiving-side apparatus transmits the STATUS-PDU (NACK) in which the particular value (predetermined value) is set in the "Selective NACK Last Octet" field.

In step S2106, the RLC sublayer of the transmitting-side apparatus determines that a portion (the RLC-data-PDU #3 in the example in FIG. 10) from the retransmission start position (position set in the "Selective NACK Fast Octet" field) to the last portion in the RLC-SDU with SN=X needs to be retransmitted, and retransmits the portion. This is because the particular value (predetermined value) is set as the value of the "Selective NACK Last Octet" field in the STATUS-PDU (NACK) (retransmission request signal) received from the receiving-side apparatus (in other words, the predetermined value is notified as the retransmission end position by the retransmission request signal).

The present invention has been described above by using the aforementioned embodiments. However, it is obvious to those skilled in the art that the present invention is not limited to the embodiments described in this description. The present invention can be implemented as a revised and modified form without departing from the spirit and scope of the present invention, which are defined by the appended claims. Thus, the contents of this description aim to describe the exemplification and not to impose any limitation on the present invention.

Note that, the entire contents of Japanese Patent Application No. 2007-101189 (filed on April 6, 2007) are incorporated in this description by reference.

### INDUSTRIAL APPLICABILITY

As described above, the retransmission request transmission method, the transmitting-side apparatus and the receiving-side apparatus according to the present invention are advantageous because they enable processing of a retransmission request for the last RLC-data-Sub-PDU (RLC-data-PDU in the case shown in FIG. 2) forming an RLC-data-PDU (RLC-SDU in the case shown FIG. 2) in the transmitting-side apparatus.

## Claims

1. A retransmission request transmission method in which a receiving-side apparatus transmits a retransmission request signal for a packet transmitted from a transmitting-side apparatus in a mobile communication system where the transmitting-side apparatus is capable of generating a plurality of second packets by segmenting a first packet in accordance with a quality of a radio link with the receiving-side apparatus, the first packet being a data unit to which packet identification information is to be assigned, and then of transmitting the plurality of second packets, the method comprising the steps of:
determining, at the receiving-side apparatus, a retransmission start position and a retransmission end position of each of the second packets in the first packet, on the basis of the packet identification information of the first packet and a starting position of the second packet in the first packet, which are included in the second packet;
notifying, at the receiving-side apparatus, the packet identification information of the first packet for which retransmission is requested to the transmitting-side apparatus, and a retransmission start position and a retransmission end position in the first packet for which retransmission is requested to the transmitting-side apparatus, through the retransmission request signal; and
retransmitting, at the transmitting-side apparatus, a portion from the retransmission start position to the retransmission end position in the first packet, on the basis of the packet identification information of the first packet and the retransmission start position and the retransmission end position in the first packet, which are included in the retransmission request signal received from the receiving-side apparatus; wherein
the transmitting-side apparatus retransmits a portion from the retransmission start position to the last portion in the first packet, when a predetermined value is notified as the retransmission end position by the retransmission request signal.

2. A transmitting-side apparatus configured to retransmit a particular packet in accordance with a retransmission request signal for the particular packet from a receiving-side apparatus in a mobile communication system capable of generating a plurality of second packets by segmenting a first packet in accordance with a quality of a radio link with the receiving-side apparatus, the first packet being a data unit to which packet identification information is to be assigned and then of transmitting the second packets, wherein
the transmitting-side apparatus is configured to retransmit a portion from a retransmission start position to a retransmission end position in the first packet, on the basis of the packet identification information of the first packet and a retransmission start position and a retransmission end position in the first packet, which are included in the retransmission request signal received from the receiving-side apparatus, and
the transmitting-side apparatus is configured to retransmit a portion from the retransmission start position to the last portion in the first packet, when a predetermined value is notified as the retransmission end position by the retransmission request signal.

3. A receiving-side apparatus configured to transmit a retransmission request signal for a packet transmitted from a transmitting-side apparatus, wherein
when the transmitting-side apparatus generates a plurality of second packets by segmenting a first packet in accordance with a quality of a radio link with the receiving-side apparatus, the first packet being a data unit to which the packet identification information is to be assigned, and transmits the plurality of second packets, the receiving-side apparatus is configured to determine a retransmission start position and a retransmission end position of each of the second packets in the first packet, on the basis of the packet identification information of the first packet and a starting position of the second packet in the first packet, which are included in the second packet;
the receiving-side apparatus is configured to notify, through the retransmission request signal, the packet identification information of the first packet for which retransmission is requested to the transmitting-side apparatus, and the retransmission start position and the retransmission end position in the first packet for which retransmission is requested to the transmitting-side apparatus; and
the receiving-side apparatus is configured to notify a predetermined value as the retransmission end position by the retransmission request signal, when retransmission of a portion from the retransmission start position to the last in the first packet is determined to be requested.
